# EUROPEAN PATENT APPLICATION

(11) **EP 3 719 311 A1**
(43) Date of publication of application: **07.10.2020**
(21) Application number: 19166599.1
(22) Date of filing: 01.04.2019
(51) Int. Cl.: F03D 80/30, F03D 17/00

(54) **ENERGY SUPPLY FOR SENSORS IN A WIND TURBINE**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

A wind turbine (1) includes a tower (2), a nacelle (3) and at least one rotatable blade and at least one sensor (10) comprising an energy harvester (11) and a sensing element (17) for measuring a physical variable. The energy harvester (11) includes:
a receiving antenna (12) for receiving an electromagnetic signal (100),
an electrical storage (15) for storing electrical energy and electrically connected to the sensing element (17),
a rectifier (14) electrically connected between the antenna (12) and the storage (15).

## Description

### Field of invention

The present invention relates to a device for providing energy supply to a sensor installed on a wind turbine. Particularly, but not exclusively, the present invention relates to a sensor a device for providing energy supply to a sensor installed in a blade for a wind turbine.

### Art Background

Powering of sensors installed inside a wind turbine and, in particular inside a wind turbine blade, is problematic, because in the event of a lighting strike the lighting can go directly through the sensor cables or can couple into the sensor cables. In both cases the sensor may be irreparably damaged.

For this reason, in the above defined technical field, it is already known to power sensors without using electrical cables. For example the powering can be performed by means of optical energy, for example emitted by a laser and transported through an optical fiber. Alternatively mechanical energy harvesters are known, for example based on MEMS (" Micro Electronic Mechanical System") technology, which use the kinetic energy of moving parts, for example the wind rotor of the wind turbine, to produce powering energy for the sensors installed in the wind turbine.

### Summary of the Invention

Scope of the present invention is to provide an alternative to the above described systems for powering the sensors inside a wind turbine, which achieves a plurality of advantages with reference to the above cited prior art. For example the according to the present invention may be characterized by simplicity of construction and maintenance, efficiency and cost effectiveness.

This scope is met by the subject matter according to the independent claims. Other advantageous embodiments of the present invention are described by the dependent claims.

According to the present invention a wind turbine includes a tower, a nacelle, at least one rotatable blade and at least one sensor comprising an energy harvester and a sensing element for measuring a physical variable. The energy harvester includes:
a receiving antenna for receiving an electromagnetic signal,
an electrical storage for storing electrical energy and electrically connected to the sensing element,
a rectifier electrically connected between the antenna and the storage.

The sensing element may measure a physical variable which is relevant in a wind turbine, for example vibration, temperature, pressure, humidity or other. The sensor may be installed in any component of the wind turbine, for example any of the blades or the tower or the nacelle.

The energy harvester of the present invention is based on collecting energy from available electromagnetic sources, which transmits electromagnetic signal in the wind turbine environment. Suitable electromagnetic sources for the energy harvester of the present invention may be, for example, radio frequency sources, like television and radio stations. Alternatively, according to embodiments of the present invention, the wind turbine further includes a transmitter for transmitting the electromagnetic signal to the receiving antenna of the energy harvester. The transmitter may include a transmitting antenna or a leaky feeder.

With the term "leaky feeder" it is meant a communications elongated component, which leaks an electromagnetic wave which is transmitted along the component. The leaky feeder may be constituted by a leaky coaxial cable or a leaky waveguide or a leaky stripline. The leaky feeder allows the electromagnetic signal to leak out of the leaky feeder along its length and to be made available to the energy harvester of the sensor.

The energy harvester of the sensor according to the present invention allows avoiding the risks connected with cable connections, in particular during lighting. With respect to other cable-less solutions, for example involving the use of a source of optical energy (laser) and optical fibre cable or MEMS, an energy harvester collecting energy from an electromagnetic signal is characterized by simpler and cheaper components.

According to embodiments of the present invention, the energy harvester may further include a band-pass filter electrically connected between the receiving antenna and the rectifier. Advantageously, the band-pass filter may be used for selective choosing one band of frequency among the frequencies, which are available to the energy harvester.

According to embodiments of the present invention, the sensor further comprises a control circuit electrically connected between the electrical storage and the sensing element. The sensor may further comprise a sensor transmitter electrically connected to the control circuit. Advantageously, the sensor transmitter may be used to transmit information, for example measurement data, from the sensor. A leaky feeder may also be arranged for receiving the information sent by the sensor.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine according to a first embodiment of the present invention.
Fig. 2 shows a schematic section of a wind turbine according to a second embodiment of the present invention.
Fig. 3 shows a schematic section of a wind turbine according to other embodiments of the present invention.
Fig. 4 shows a schematic representation of a sensor for a wind turbine according to embodiments of the present invention.
Fig. 5 shows a schematic representation of the electrical circuit of a first embodiment of an energy harvester included in the sensor of Fig. 4.
Fig. 6 shows a schematic representation of the electrical circuit of a second embodiment of an energy harvester included in the sensor of Fig. 4.
Fig. 7 shows a schematic representation of the electrical circuit of a third embodiment of an energy harvester included in the sensor of Fig. 4.
Fig. 8 shows a schematic representation of the electrical circuit of a fourth embodiment of an energy harvester included in the sensor of Fig. 4.

### Detailed Description

The illustrations in the drawings are schematically. It is noted that in different figures, similar or identical elements are provided with the same reference signs.

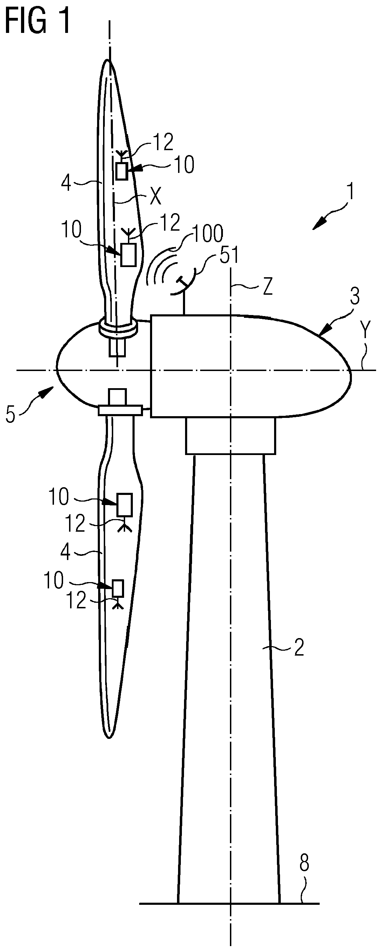

**Figures 1** to **3** show respective embodiment of a wind turbine 1 for generating electricity. The wind turbine 1 includes one or more sensors 10 according to the invention. The wind turbine 1 comprises a tower 2 which is mounted on the ground 8 at one bottom end. At the opposite top end of the tower 2 there is mounted a nacelle 3. The nacelle 3 accommodates the electrical generator (not shown in the attached figures) of the wind turbine 1. In between the tower 2 and the nacelle 3 a yaw angle adjustment device (not shown) is provided, which is capable of rotating the nacelle around a vertical yaw axis Z. The wind turbine 1 further comprises a wind rotor 5 having one or more rotational blades 4 (in the perspective of Figure 1 only two blades 4 are visible). The wind rotor 5 is rotatable around a rotational axis Y to transfer the rotational energy to the electrical generator of the nacelle 3. The generation of electrical power through the present invention is not a specific object of the present invention and therefore not described in further detail. In general, when not differently specified, the terms axial, radial and circumferential in the following are made with reference to the rotational axis Y. The blades 4 extend radially with respect to the rotational axis Y.

In the embodiments of the figures 1 to 3 each of the blades 4 includes two sensors 10 according to the present invention. According to other embodiments of the present invention, the wind turbine 1 includes at least one sensor 10, which may be installed in any of the tower 2, the nacelle 3, one of the rotatable blades 4 and any other component of the wind turbine. Each sensor 10 includes a receiving antenna 12 for receiving an electromagnetic signal 100.

In the embodiment of the figure 1 the electromagnetic signal 100 is emitted by a transmitting antenna 51, installed on the nacelle 3. In the embodiments of the figure 1 the electromagnetic signal 100 is emitted by a transmitting antenna 51 installed on the nacelle 3.

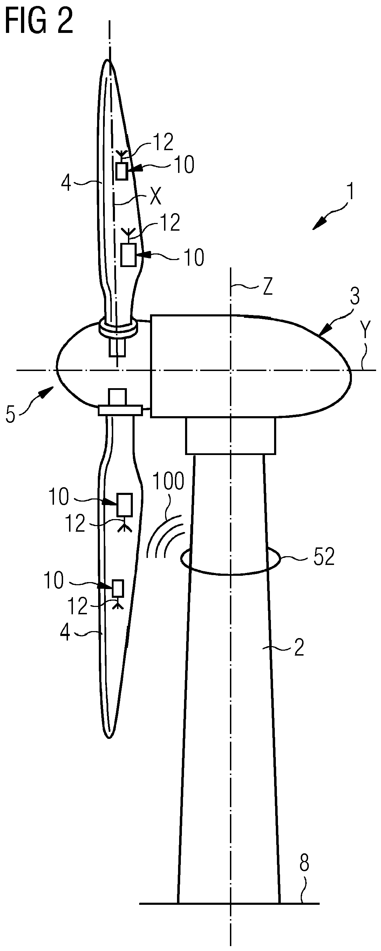

In the embodiment of the figure 2 the electromagnetic signal 100 is emitted by an electromagnetic signal source connected to a leaky feeder 52. The leaky feeder 52 allows the electromagnetic signal 100 to leak out of the leaky feeder along its length and to be made available to the receiving antenna 12. The leaky feeder 52 is configured as a loop attached to the tower 2. Such configuration permits that the emission of the electromagnetic signal 100 can be directed according to any direction around the vertical yaw axis Z.

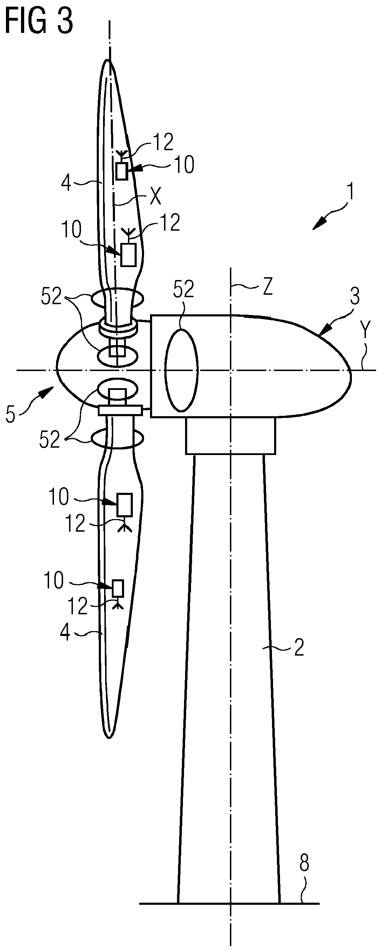

Figure 3 shows other possible installation of the leaky feeder 52 emitting the electromagnetic signal 100. For example may be installed in any of the tower 2, the nacelle 3, the wind rotor 5 and the rotatable blades 4.

The leaky feeder 52 is configured as a closed loop, as shown in the embodiments of the figures 1 to 3, or as an arc extending for less than 360 degrees.

According to other embodiments of the present invention (not shown), the wind turbine 1 may include any other transmitter for transmitting the electromagnetic signal 100 to the receiving antenna 12. The position of the transmitter may be chosen according to optimisation criteria, for example a position may be chosen which minimises the distance between the transmitter transmitting the electromagnetic signal 100 and the receiving antenna 12.

According to other embodiments of the present invention (not shown), the wind turbine 1 does not include any transmitter for transmitting the electromagnetic signal 100 to the receiving antenna 12, the electromagnetic signal 100 being emitted by an external electromagnetic signal source. For example, the electromagnetic signal 100 may be emitted by radio frequency sources, like television and radio stations.

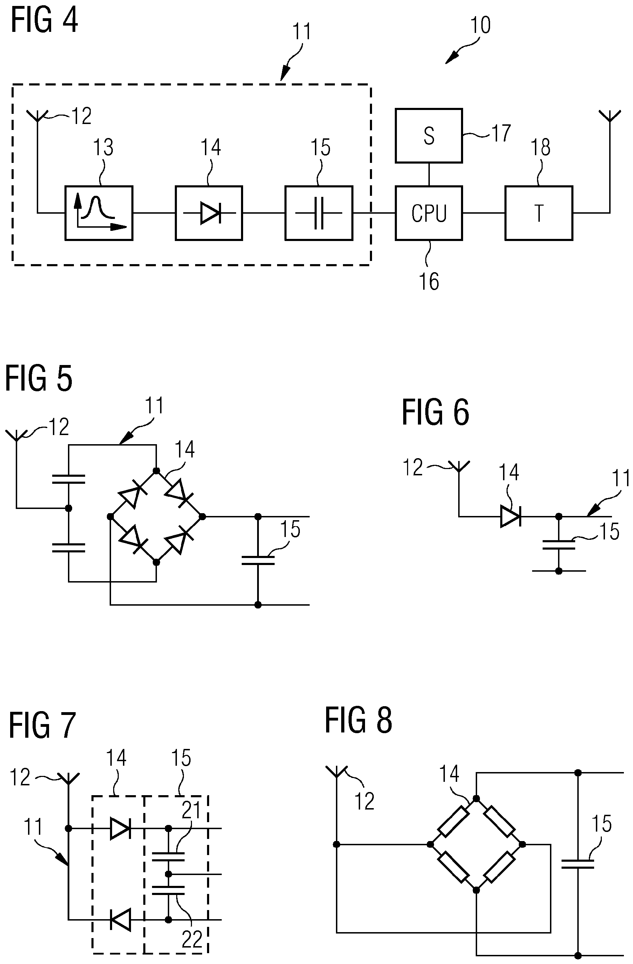

**Figure 4** shows more in detail the sensor 10. The sensor 10 comprises an energy harvester 11 and a sensing element 17 for measuring a physical variable. The sensing element 17 measures any physical variable which is relevant in a wind turbine, for example vibration, temperature, pressure, humidity or other. The energy harvester 11 includes the receiving antenna 12. Attached to the receiving antenna 12, the energy harvester 11 comprises, electrically connected in series, a band-pass filter 13, a rectifier 14 and an electrical storage 15 for storing the electrical energy of the electromagnetic signal 100, which is harvested by the receiving antenna 12.

The band-pass filter 13 electrically connected between the receiving antenna 12 and the rectifier 14 allows the energy harvester 11 to work in a chose range of frequency, for example far from the risk of interferences. Alternatively, a high-pass filter instead of the band-pass filter 13 may be used to select frequency above a threshold frequency, for example 10 MHz for avoiding lighting interferences. According to other embodiments of the present invention, no filter is present between the receiving antenna 12 and the rectifier 14. The electrical storage 15 may comprises at least one capacitor. Alternatively, other the electrical storages may be used.

According to the embodiment of figure 4, the sensor 10 further comprises a control circuit 16 electrically connected between the electrical storage 15 and the sensing element 17. The control circuit 16 may comprise a CPU, an FPGA ("Field Programmable Gate Array") and other circuitry for serving the sensing element 17. The control circuit 16 may comprises further circuitry for serving a sensor transmitter 18 electrically connected to the control circuit 16. The sensor transmitter 18 comprises a transmitting antenna for transmitting information, for example measurement data, from the sensor 10 towards a receiver, which may be provided on the wind turbine 1. The receiver may be provided with a respective leaky feeder for receiving the information transmitted by the sensor 10. The electrical energy stored in the electrical storage 15 provides, when required, the powering for the control circuit 16, the sensing element 17 and the sensor transmitter 18.

**Figures 5** to **8** show four respective embodiments of the energy harvester 11. All the four respective embodiments of the figures 5 to 8 respectively include the receiving antenna 12, the rectifier 14 and the electrical storage 15. The rectifier 14 may include one simple diode (figure 6), two diodes arranged in opposite direction in two respective branches connected in parallel to the receiving antenna 12 (figure 7), a plurality of diodes (figure 5) or a plurality of active switches, for example MOSFETs or JFETs. According to other embodiments of the present invention (not shown), the energy harvester 11 may include any other type of rectifier 14, which is able to convert the wave signal provided by the receiving antenna 12 to a DC signal, to be transmitted to the electrical storage 15. The electrical storage 15 may comprise, for example, one single capacitor (figures 5, 6 and 8), two capacitor (figure 7), or a plurality of capacitors (embodiment not shown). According to other embodiments of the present invention (not shown), the energy harvester 11 may include any other type of electrical storage 15, which is able to store the energy of the DC signal provided by the rectifier 14.

## Claims

1. Wind turbine (1) including a tower (2), a nacelle (3), at least one rotatable blade (4) and at least one sensor (10) comprising an energy harvester (11) and a sensing element (17) for measuring a physical variable, the energy harvester (11) including:
a receiving antenna (12) for receiving an electromagnetic signal (100),
an electrical storage (15) for storing electrical energy and electrically connected to the sensing element (17),
a rectifier (14) electrically connected between the antenna (12) and the storage (15).

2. Wind turbine (1) according to claim 1, wherein the energy harvester (11) further includes a band-pass filter (13) electrically connected between the receiving antenna (12) and the rectifier (14).

3. Wind turbine (1) according to claim 1 or 2, wherein the sensor (10) further comprises a control circuit (16) electrically connected between the electrical storage (15) and the sensing element (17).

4. Wind turbine (1) according to claim 3, wherein the sensor (10) further comprises a sensor transmitter (18) electrically connected to the control circuit (16).

5. Wind turbine (1) according to any of the previous claim, wherein the electrical storage (15) comprises at least one capacitor (21, 22).

6. Wind turbine (1) according to any of the previous claim, wherein the rectifier (14) comprises at least one active switch (23).

7. Wind turbine (1) according to any of the previous claim, wherein the wind turbine further includes a transmitter (51, 52) for transmitting the electromagnetic signal (100) to the receiving antenna (12).

8. Wind turbine (1) according to claim 7, wherein the transmitter includes a transmitting antenna (51).

9. Wind turbine (1) according to claim 7, wherein the transmitter includes a leaky feeder (52).

10. Wind turbine (1) according to claim 9, wherein the leaky feeder (52) is installed in the tower (2) or the nacelle (3) or in at least one of the rotatable blades (4).

11. Wind turbine (1) according to any of the previous claims, wherein the sensor (10) is installed in the tower (2) or the nacelle (3) or in at least one of the rotatable blades (4).
